# FASCICULE DE BREVET EUROPEEN

(11) **EP 2 353 038 B1**
(45) Date de publication et mention de la délivrance du brevet: **28.11.2012**
(21) Numéro de dépôt: 09760240.3
(22) Date de dépôt: 29.10.2009
(51) Int. Cl.: G02B 5/18, E04C 2/54, F21S 11/00

(54) **RESEAU COMPRENANT DES SOUS-RESEAUX A BLOCS DE MOTIFS DIFFUSANT LA LUMIERE**
ARRAY MIT SUBARRAYS MIT LICHTSTREUMUSTERBLÖCKEN
ARRAY INCLUDING SUB-ARRAYS WITH LIGHT-SCATTERING PATTERN BLOCKS

(30) Priorité: 04.11.2008 FR 0857493
(43) Date de publication de la demande: 10.08.2011
(73) Titulaire: Saint-Gobain Glass France, 92400 Courbevoie (FR)
(72) Inventeur: SARRANT-FORESTI, Maud, F-92150 Suresnes (FR); LECAMP, Guillaume, F-75018 Paris (FR)
(74) Mandataire: Colombier, Christian
(86) Numéro de dépôt international: PCT/FR2009/052092
(87) Numéro de publication internationale: WO 2010/052411

(56) Documents cités:
- US-A- 5 009 484
- US-A- 6 057 082
- US-A1- 2003 231 395

## Description

L'invention concerne le domaine des vitrages pour bâtiment comprenant des éléments capable de rediriger la lumière venant de l'extérieur dans une direction souhaitée à l'intérieur, généralement le plafond. Ce type de vitrage est généralement qualifié de « Daylighting » lorsque c'est la lumière solaire visible que l'on cherche à dévier.

Ce type de vitrage est généralement considéré comme contribuant à économiser l'énergie du fait de l'utilisation plus efficace en intérieur de lumière extérieure, ce qui permet de réduire l'éclairage artificiel.

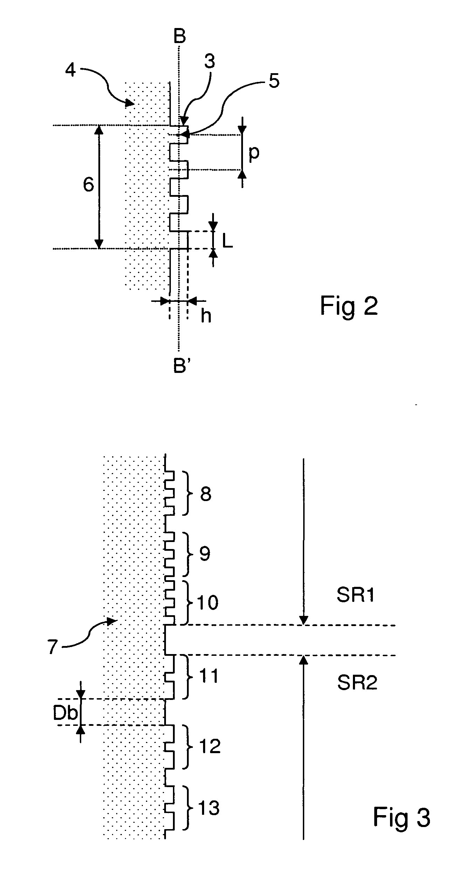

Le US5009484 enseigne un vitrage comprenant en surface un réseau de diffraction constitué de traits parallèles en relief. Ce document enseigne que le réseau mène habituellement à une diffraction de la lumière se traduisant par une séparation de couleurs. Cet effet n'est pas forcément souhaité. Pour limiter l'ampleur de ce phénomène, ce même document préconise (voir sa figure 3) de juxtaposer verticalement trois réseaux successifs pour chacune des trois couleurs fondamentales, les faisceaux émergents de ces trois couleurs devant se mélanger de nouveau au plafond pour reformer une zone éclairée incolore. Les trois réseaux successifs présentent des périodicités différentes, variant de façon monotone et selon un ordre précis. Ce document enseigne également que ces trois réseaux successifs peuvent être remplacés par un réseau unique dont la périodicité évolue de façon monotone de l'une à l'autre des extrémités de ce réseau unique. Les solutions enseignées par ce brevet fonctionnent quelque peu mais n'empêchent pas toute formation d'irisations. De plus, dans ce document, les motifs diffusants sont penchés, éventuellement variables, et de profondeur variable, ce qui rend très difficile une fabrication industrielle sur de grande surface et à bas coûts.

La demande de brevet PCT/FR2008/050677 enseigne un substrat transparent comprenant à sa surface un réseau de lignes d'au moins 200 motifs diffusant la lumière, lesdits motifs étant séparés par des domaines d'indice de réfraction différent de celui des motifs, la distance d entre barycentres de motifs voisins variant de manière non-monotone d'un bord à l'autre du réseau, de sorte que pour tout groupe de 50 motifs successifs, la distance d entre barycentres de motifs voisins dudit groupe est au moins une fois supérieure et au moins une fois inférieure à la distance moyenne dm des distances d entre barycentres de motifs voisins dudit groupe, dm étant comprise entre 75 nm et 200 µm. Ce substrat est transparent en vision directe et redirige la lumière en la diffusant avec peu d'irisation en application daylighting.

La demande de brevet PCT/FR2008/050678 enseigne un substrat transparent comprenant à sa surface un ensemble diffusant la lumière comprenant au moins 10 sous-réseaux juxtaposés de lignes parallèles de motifs, lesdits motifs étant séparés par des domaines d'indice de réfraction différent de celui des motifs, chaque sous-réseau comprenant au moins 20 motifs identiques successifs répétés à distance égale selon une période p, ladite période variant de manière non-monotone d'un bord à l'autre de l'ensemble des sous-réseaux. Ce substrat redirige la lumière avec peu d'irisation en application daylighting.

Si les deux demandes internationales précitées procurent déjà une amélioration notable en réduisant l'effet d'irisation procuré par un réseau, la présente demande se propose de diminuer encore plus l'irisation, c'est-à-dire l'apparition de couleurs au niveau de la lumière projetée (généralement au plafond).

La présente invention a trait à un réseau de surface limitant la séparation apparente des différentes couleurs de la lumière et menant à un éclairage de sensiblement même coloration que la lumière incidente, sans irisation apparente prononcée de la lumière déviée (généralement sur le plafond). Ainsi, si la lumière incidente est sensiblement incolore à l'oeil nu, la lumière émergente l'est également. On souhaite que la lumière déviée le soit selon un seul ordre du réseau (généralement l'ordre 1 du réseau), car sinon cela produirait différentes zones séparées d'éclairage (au plafond si la lumière est projetée au plafond) dont certaines ne seraient pas judicieusement placées et de plus, cela pourrait être inesthétique.

Le substrat selon l'invention est transparent, ce qui signifie que l'on peut alors voir de façon nette à travers lui et ce, quel que soit l'angle de vision pour l'observateur. Une partie de la lumière est redirigée (c'est-à-dire déviée) par le substrat. Le réseau diffuse la lumière qu'il dévie. Si l'on défini l'angle d'incidence de la lumière comme étant l'angle compris entre la perpendiculaire au substrat et la direction de la lumière, la lumière redirigée est de 10 à 50% de la lumière totale transmise (traversant le substrat), en particulier pour la lumière d'angle d'incidence supérieure à 30°. Ainsi, l'invention présente une utilité plus élevée pour équiper les vitrages (disposés verticalement) de locaux situés aux latitudes terrestres telles que les rayons solaires peuvent former un angle d'incidence avec l'horizontale supérieur à 30° au moins partiellement au cours de l'année.

Selon l'invention, on crée à la surface d'un substrat transparent et selon une direction parallèle à ladite surface un réseau diffusant la lumière comprenant des sous-réseaux de lignes parallèles de motifs, lesdits sous-réseaux étant disposés dans le même plan, à côtés les uns des autres, voire de façon juxtaposée, de sorte que toutes les lignes de motifs du réseau soient parallèles entre elles.

Le substrat transparent selon l'invention comprend à sa surface un réseau de lignes parallèles de motifs séparés par des domaines d'indice de réfraction différent de celui des motifs, ledit réseau diffusant la lumière et comprenant au moins 4 sous-réseaux, chaque sous-réseau comprenant de lignes parallèles de motifs, lesdits motifs étant séparés par des domaines d'indice de réfraction différent de celui des motifs, chacun desdits sous-réseau comprenant une pluralité (ce qui signifie au moins 2) de blocs de motifs identiques de largeur L, chaque bloc comprenant 2 à 10 desdits motifs, les barycentres de motifs voisins à l'intérieur d'un bloc étant distants d'une période p constante pour le bloc considéré et caractéristique du sous-réseau considéré, la distance Db entre blocs voisins variant de façon non-monotone quand on va d'un bord d'un sous-réseau à l'autre bord du même sous-réseau et en étant supérieure à 0 fois L et inférieure à 20 fois L, et de sorte qu'elle soit au moins une fois supérieure à 1,2 Dbₘ et au moins une fois inférieure à 0,7 Dbₘ, Dbₘ étant la moyenne arithmétique des distances entre blocs du sous-réseau, et la période p variant d'un sous-réseau à l'autre de façon non-monotone entre 0,5 pₘ et 1,5 pₘ quand on passe d'un bord du réseau à l'autre, pₘ étant la moyenne arithmétique des périodes p caractéristiques des sous-réseaux, et de sorte qu'au moins un sous-réseau a une période supérieure à 1,2 pₘ et qu'au moins un sous-réseau a une période inférieure à 0,8 pₘ. Un sous-réseau selon l'invention contient nécessairement des blocs au sens ci-dessus donné.

Si l'on parcourt le réseau selon l'invention de l'un de ses bords à l'autre bord, un premier sous-réseau à bloc commence au début du premier motif de son premier bloc (ce qui correspond également au début du premier bloc) et finit à la fin du dernier motif de son dernier bloc (ce qui correspond également à la fin du dernier bloc). Entre deux blocs d'un même sous-réseau, il peut y avoir des motifs n'appartenant pas à un bloc. Cependant, au moins 80% et de préférence au moins 90% et même 100% de motifs d'un sous-réseau fait partie de blocs. De préférence, au moins 80% et de manière encore préférée 90% et même 100% des motifs du réseau selon l'invention font partie de blocs (et donc aussi de sous-réseaux). Chaque sous-réseau contient au moins 4 blocs et de préférence de 100 à 5000 blocs. Entre deux sous-réseaux du réseau selon l'invention, il peut y avoir des motifs n'appartenant pas à un sous-réseau. Cependant, au moins 80% et de préférence au moins 90% et même 100% des motifs du réseau selon l'invention font partie de sous-réseaux. Les sous-réseaux peuvent être espacés par des zones sans motifs. Cependant, dans le réseau selon l'invention, deux motifs voisins (appartenant à un bloc ou non, appartenant à un sous-réseau ou non) sont distants (de barycentre à barycentre) de moins de 20 fois et de préférence de moins de 5 fois la largeur du motif le plus large de ces deux motifs voisins.

Le réseau selon l'invention comprend généralement plus de 10 sous-réseaux. Il comprend généralement moins de 1000 sous-réseaux.

D'un bord à l'autre du réseau, la période p caractéristique des sous-réseaux varie de façon non-monotone. En valeur absolue, cette période p est comprise entre 100 nm et 20 µm. Elle varie à l'intérieur du domaine entre 0,5 pₘ et 1,5 pₘ , pₘ étant la moyenne arithmétique des périodes p caractéristiques des sous-réseaux. Elle varie de façon non-monotone de sorte qu'au moins un sous-réseau a une période supérieure ou égale à 1,2 pₘ et qu'au moins un sous-réseau a une période inférieure à 0,8 pₘ. Le terme « non-monotone » signifie que cette période ne fait pas qu'augmenter ou que diminuer quand on va d'un bord du réseau à l'autre bord. Au contraire, cette distance p alterne de plus fortes valeurs avec de plus faibles valeurs quand on passe d'un bord du réseau à l'autre. De préférence, plus de 25% des sous-réseaux ont une période p supérieure à 1,2 pₘ. De préférence, plus de 25% des sous-réseaux ont une période p inférieure à 0,8 pₘ.

Dans le cadre de la présente demande, la notion de diffusion s'applique à la lumière déviée et concerne le réseau entier (comprenant tous les sous-réseaux).

Selon l'invention, on crée à la surface d'un substrat transparent et selon une direction parallèle à ladite surface un réseau comprenant une alternance d'au moins deux indices de réfraction R1 et R2 par des motifs élémentaires linéaires d'indice R1 séparés par des domaines élémentaires linéaires d'indice R2, lesdits motifs et domaines étant géométriquement complémentaires entre eux. Les motifs et domaines sont complémentaires sur le plan géométrique car ils s'imbriquent les uns dans les autres. C'est pourquoi la seule définition de la géométrie des motifs d'indice R1 est suffisante puisque les domaines d'indice R2 remplissent tout l'espace situé entre les motifs. On définit la géométrie des motifs notamment à partir de leur largeur L parallèlement au substrat, de la distance entre barycentres de motifs voisins, et de leur profondeur h.

Selon l'invention, le réseau contient une multiplicité de sous-réseaux aux motifs parallèles (ce parallélisme valant pour les motifs à l'intérieur d'un sous-réseau mais aussi d'un sous-réseau à l'autre) au moins au nombre de 4. Les différents sous-réseaux sont placés dans le réseau de façon dispersée sur le plan de la périodicité, de façon à brouiller les différents rayonnements émergents et mieux aboutir à un éclairage neutre et sans coloration particulière.

Par distance entre blocs voisins, on entend la distance entre le dernier motif de l'un des blocs et le premier motif de l'autre bloc (voir Db sur la figure 3). Selon l'invention, la distance entre blocs voisins à l'intérieur d'un sous-réseau varie de façon non-monotone en étant supérieure à 0 fois L et inférieure à 20 fois L, L étant la largeur d'un motif de bloc, et de sorte qu'elle soit au moins une fois supérieure à 1,2 Dbₘ et au moins une fois inférieure à 0,7 Dbₘ, Dbₘ étant la moyenne arithmétique des distances entre blocs du sous-réseau. De préférence, plus de 25% des distances entre blocs voisins sont supérieures à 1,2 Dbₘ. De préférence, plus de 25% des distances entre blocs voisins sont inférieures à 0,7 Dbₘ.

Dans un sous-réseau, des motifs identiques juxtaposés forment des blocs de 2 à 10 motifs et de préférence de 2 à 5 motifs. Un bloc est caractérisé par une distance identique entre motifs, comptée de barycentre à barycentre. Quand on part d'un bloc, dès que la distance entre motifs change, c'est que l'on quitte le bloc. De préférence, au moins 80% et même au moins 90% et même 100% des motifs du sous-réseau font partie de blocs. Un bloc comprend au minimum deux motifs et un intervalle entre ces deux motifs. Un bloc de n motifs contient n-1 intervalles. Le sous-réseau contient au moins 4 blocs identiques.

Compte tenu de cette notion de blocs, on peut dire que la structure du sous-réseau est localement organisée. L'effet de cette organisation locale et notamment du caractère constant de la largeur L dans un sous-réseau et de préférence dans tout le réseau, est la transparence sans diffusion en vision directe. Un substrat transparent est défini comme un substrat au travers duquel un objet n'apparait pas flou.

Le réseau selon l'invention comprend généralement au total plus de 100 000 motifs et plus généralement plus de 1 000 000 motifs.

La distance entre motifs voisins dans un sous-réseau est de l'ordre de la longueur d'onde du rayonnement que l'on cherche à dévier.

Rappelons que les rayonnements lumineux ont sensiblement les longueurs d'onde suivantes :
Ultra-violet : 150 à 400 nm
Visible : 400 à 800 nm
Infrarouge: 800 nm à 100 µm

Dans tout le réseau selon l'invention, la distance entre motifs voisins (ce qui équivaut à « entre barycentres de motifs voisins ») est généralement comprise entre 75 nm et 200 µm et plus généralement entre 100 nm et 20 µm.

Si c'est la lumière visible que l'on cherche à dévier, on choisit de préférence pₘ dans la plage de 200 à 600 nm et de préférence dans la plage de 300 à 500 nm. Pour dévier la lumière visible, pₘ est de préférence supérieur ou égal à 200 nm et même supérieur ou égal à 300 nm. Pour dévier la lumière visible, pₘ est de préférence inférieur ou égal à 600 nm et même inférieur à 500 nm et de manière encore préférée inférieur ou égal à 450 nm. Si pₘ est trop élevé, notamment au-delà de 500 nm, la lumière transmise non-déviée est moins intense et, par ailleurs, on fait apparaître des ordres supérieurs du réseau, ce qui signifie que la lumière déviée l'est en plusieurs endroits.

Bien que l'on n'exclut pas qu'ils soient inclinés, les motifs sont généralement non inclinés (l'homme du métier dirait « blazés », néologisme issus de l'anglais « blazed »), c'est-à-dire symétriques par rapport à la droite perpendiculaire au substrat et passant par le barycentre du motif.

On définit la largeur L d'un motif comme étant sa largeur au niveau de son barycentre. Les motifs sont généralement des parallélépipèdes. Dans la pratique, la perfection n'étant pas de ce monde, ces parallélépipèdes peuvent avoir leurs coins (concaves et convexes) plus ou moins arrondis. De préférence, L est constant ou sensiblement constant pour tout le réseau. Cependant, L peut varier autour d'une valeur moyenne Lₘ (moyenne arithmétique), cette variation étant de préférence inférieure à 25% de Lₘ. La largeur L peut donc varier entre 0,75 Lₘ et 1,25 Lₘ. Plus L varie dans le réseau, plus celui-ci perd en transparence en vision directe. En général, L est compris entre 0,2 fois la période p et 0,8 fois la période p et va de préférence de 0,4 fois la période p à 0,6 fois la période p.

Généralement, la profondeur h des motifs est constante pour tout le réseau. Généralement, le rapport de la largeur L sur la profondeur h des motifs est choisi dans la plage allant de 0,2 à 5 et de préférence de 0,4 à 2. Généralement, le rapport de la largeur L sur la profondeur h des motifs est constant pour tout le réseau.

Si l'on suit une ligne parallèle au substrat passant par les barycentres des motifs, on passe successivement par l'indice de réfraction R1 des motifs et l'indice de réfraction R2 des domaines entre motifs. Notamment, les motifs peuvent être en verre et les domaines peuvent être de l'air. On est dans ce cas lorsque l'on produit à titre de motifs des excroissances en verre à la surface d'un substrat en verre. L'air ambiant remplit l'espace entre les motifs et constitue naturellement les domaines. Dans ce cas, l'indice R1 est celui du verre, par exemple 1,5 et l'indice R2 est celui de l'air, c'est-à-dire 1. Dans ce cas (alternance verre/air) on a réalisé un relief de motifs à la surface d'un substrat. Le passage d'un motif à un domaine peut cependant correspondre à une modification d'indice de réfraction ne correspondant pas à un relief. En effet, il peut s'agir de deux matériaux différents imbriqués l'un dans l'autre de telle sorte que la surface soit lisse au toucher. On peut notamment réaliser une telle alternance de matériaux par les techniques d'échange ionique ou basées sur un effet photoréfractif et électrooptique.

Dans le même réseau, tous les motifs ont généralement le même indice de réfraction et tous les domaines ont généralement le même indice de réfraction. Les indices de réfractions des motifs et domaines peuvent aller de 1 à 2,2. Généralement les motifs peuvent avoir leur indice de réfraction allant de 1,1 à 1,8. Généralement les domaines peuvent avoir leur indice de réfraction allant de 1 à 1,5.

La différence entre les deux indices de réfraction (ceux des motifs et des domaines) peut généralement être comprise entre 0,02 et 1,5.

En général, si les domaines sont de l'air, les motifs ont un indice de réfraction supérieur à celui des domaines.

S'agissant essentiellement d'équiper des vitrages de bâtiments, on choisit les matériaux constituant lesdits vitrages (substrat, éventuelle pièce rapportée sur ledit substrat) avec une transparence satisfaisante. Notamment on peut réaliser le réseau selon l'invention sur un film en plastique (PET, PMMA, Polycarbonate) par embossage direct. On peut aussi embosser une couche mince par exemple en acrylique rapportée sur un film en PET. Le film est ensuite collé sur un substrat en verre ou inséré entre deux feuilles de verre.

Le réseau selon l'invention sert notamment en application daylighting. Dans ce cas, il est généralement placé sur un vitrage vertical de sorte que les lignes de motifs soient horizontales. Le réseau occupe généralement une hauteur d'au moins 10 cm et plus généralement une hauteur d'au moins 20 cm du vitrage, généralement sur toute la largeur du vitrage et généralement dans la partie supérieure du vitrage.

Le réseau selon l'invention peut généralement être réalisé par les techniques suivantes : embossage, photolithographie, transfert, échange ionique, effet photoréfractif ou électrooptique.

Un premier procédé comprend l'embossage d'une couche sol-gel ou polymère rapportée sur une feuille transparente (substrat), notamment en verre. L'embossage est une déformation plastique ou viscoplastique réalisée par contact avec un élément structuré, consistant en un rouleau par exemple, et sur lequel est simultanément exercée une pression. Les couches sol-gel utilisables sont en général des couches liquides de précurseur d'oxyde minéral tel que SiO₂, Al₂O₃, TiO₂ ..., par exemple en solution dans un mélange eau-alcool. Ces couches durcissent en séchant, avec ou sans moyen auxiliaire de chauffage. Citons comme précurseur de SiO₂ le tétraéthoxysilane (TEOS) ou le méthyltriéthoxysilane (MTEOS). Des fonctions organiques peuvent être incluses dans ces précurseurs et la silice finalement obtenue. A titre d'exemple, des silanes fluorés ont été décrits dans le EP799873 pour obtenir un revêtement hydrophobe. L'embossage peut aussi être réalisé sur des couches polymères comme
le polyéthylène téréphtalate (PET),
le polystyrène,
les polyacrylates tels que poly(méthacrylate de méthyle), poly(acrylate de butyle), poly(acide méthacrylique), poly(méthacrylate de 2-hydroxyéthyle) et leur copolymères,
les polyépoxy(méth)acrylates,
les polyuréthane(méth)acrylates,
les polyimides tels que polyméthylglutarimide,
les polysiloxanes tels que polyépoxysiloxanes,
les poly (éthers vinyliques),
les polybisbenzocyclobutènes ...
seuls ou en copolymères ou mélanges de plusieurs d'entre eux.

L'embossage peut être suivi dans certains cas d'une gravure. La couche sol-gel ou polymère embossée peut y être attaquée jusqu'à réapparition du matériau de la feuille transparente sous-jacente, en premier lieu dans les parties profondes desdits motifs en relief, puis progressivement jusque dans leurs parties hautes. Ainsi la surface plus ou moins irrégulière obtenue à la fin de la gravure peut être formée entièrement dans la couche sol-gel ou polymère rapportée, ou en partie dans celle-ci et en partie dans ladite feuille transparente, ou encore entièrement dans cette dernière. Les conditions de la gravure doivent être réglées pour que cette surface qui en résulte présente des motifs en relief de dimensions satisfaisant la définition du dispositif de l'invention.

On peut citer comme procédés de gravure :
une gravure chimique, par un acide notamment,
une gravure ionique réactive (Reactive Ion (Beam) Etching = RI(B)E),
une gravure par plasma (Inductively Coupled Plasma = ICP).

Il est à remarquer que le procédé d'embossage permet le traitement rapide de relativement vastes surfaces, à un coût modéré.

Un autre procédé possible de fabrication du réseau selon l'invention comprend une photolithographie. Ce procédé consiste généralement à munir d'abord le substrat transparent d'une première couche dans laquelle pourront être formés lesdits motifs en relief. Cette première couche est comparable à la couche sol-gel ou polymère rapportée du procédé d'embossage. Elle peut d'ailleurs être de la même nature que celle-ci, notamment en silice. Dans une deuxième étape du procédé, on dépose une deuxième couche d'une résine photosensible. Celle-ci est durcie en des localisations définies, par exposition à un rayonnement ciblé. Ainsi est constitué un masque, au-dessus de la première couche à graver, après élimination des parties non durcies de la résine photosensible. Puis on grave, de la même manière que décrit ci-dessus relativement à l'étape facultative du procédé par embossage. D'éventuels résidus de la résine photosensible peuvent être éliminés.

Un autre procédé de fabrication du réseau selon l'invention comprend le transfert d'une couche nanostructurée. Une couche en adhésion sur un premier support est mise en adhésion sur un second, de manière à constituer un dispositif selon l'invention. La couche peut être en matière plastique ou similaire.

Un autre procédé utilisable repose sur un échange ionique, par exemple d'ions Na⁺ par des Ag⁺ dans un verre minéral.

Enfin, on peut utiliser un effet photoréfractif, selon lequel une lumière modulée induit une modulation spatiale de l'indice de réfraction du matériau (exemple : cristal photoréfractif en titanate de Baryum). On peut également utiliser un effet électrooptique selon lequel un champ électrique induit une modulation spatiale de l'indice de réfraction du matériau.

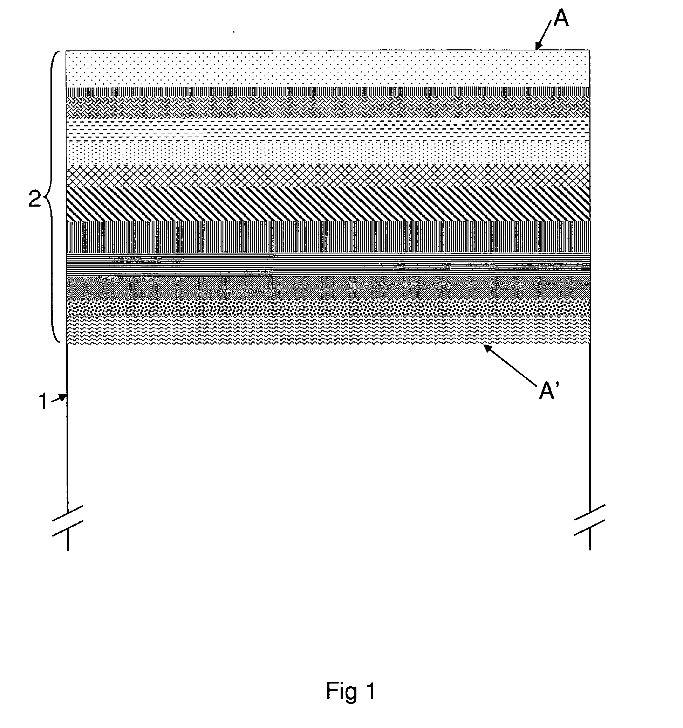

La figure 1 montre un vitrage 1 en verre minéral pouvant être monté verticalement dans une fenêtre de bâtiment. La partie supérieure du vitrage est muni d'un réseau 2 constitué de douze sous-réseaux selon l'invention. Les sous-réseaux sont représentés par des textures graphiques diverses qui ne représentent pas les motifs réels de surface. Les sous-réseaux ont tous la largeur entière du vitrage et leur taille varie en hauteur. On voit que les sous-réseaux sont juxtaposés les uns sous les autres dans le même plan en surface du vitrage, entre le bord A du réseau et le bord A' du réseau. Il s'agit d'une représentation purement qualitative pour montrer le placement des sous-réseaux les uns par rapport aux autres et sur le vitrage.

La figure 2 montre un bloc de 4 motifs identiques au motif 3 en surface d'un substrat 4 (vue en coupe perpendiculaire au substrat et aux lignes de motifs). Le barycentre du motif 3 est en 5. Ces motifs sont du type parallélépipèdes et ont une largeur L et une profondeur h. Les barycentres de motifs voisins à l'intérieur du bloc sont distants d'une distance p constante. Le bloc a la largeur indiquée par 6. Si l'on suit une ligne BB' parallèle au substrat passant par les barycentres des motifs, on passe successivement par l'indice de réfraction R1 des motifs et l'indice de réfraction R2 des domaines entre motifs.

La figure 3 représente la zone de transition entre deux sous-réseaux SR1 et SR2 en surface d'un substrat 7. On voit trois blocs 8, 9 10 du sous-réseau SR1 qui sont bien identiques. Par contre, la distance entre blocs voisins (et donc entre barycentres de blocs voisins) varie. On voit trois blocs 11, 12, 13 du sous-réseau SR2 qui sont identiques entre eux. Ici également la distance entre barycentres de blocs voisins varie. Ce que l'on entend par distance entre blocs voisins est indiqué par Db à titre d'exemple pour deux blocs du sous-réseau SR2.

## Revendications

1. Substrat transparent comprenant à sa surface un réseau de lignes parallèles de motifs séparés par des domaines d'indice de réfraction différent de celui des motifs et **caracterisé en ce que** ledit réseau diffuse la lumière et comprend au moins 4 sous-réseaux, chaque sous-réseau comprenant
une pluralité de blocs de motifs identiques de largeur L, chaque bloc comprenant 2 à 10 desdits motifs, les barycentres de motifs voisins à l'intérieur d'un bloc étant distants d'une période p constante, la distance Db entre blocs voisins variant de façon non-monotone quand on va d'un bord du sous-réseau à l'autre bord dudit sous-réseau en étant supérieure à 0 fois L et inférieure à 20 fois L, et de sorte qu'elle soit au moins une fois supérieure à 1,2 Dbₘ et au moins une fois inférieure à 0,7 Dbₘ, Dbₘ étant la moyenne arithmétique des distances entre blocs du sous-réseau,
et la période p variant d'un sous-réseau à l'autre de façon non-monotone entre 0,5 pₘ et 1,5 pₘ quand on passe d'un bord du réseau à l'autre, pₘ étant la moyenne arithmétique des périodes p caractéristiques des sous-réseaux, et de sorte qu'au moins un sous-réseau a une période supérieure à 1,2 pₘ et qu'au moins un sous-réseau a une période inférieure à 0,8 pₘ.

2. Substrat selon la revendication précédente, **caractérisé en ce que** au moins 80% et de préférence au moins 90% des motifs d'un sous-réseau fait partie de blocs.

3. Substrat selon l'une des revendications précédentes, **caractérisé en ce que** au moins 80% et de préférence au moins 90% des motifs du réseau font partie de blocs.

4. Substrat selon l'une des revendications précédentes, **caractérisé en ce que** chaque sous-réseau contient au moins 4 blocs.

5. Substrat selon la revendication précédente, **caractérisé en ce que** chaque sous-réseau contient 100 à 5000 blocs.

6. Substrat selon l'une des revendications précédentes, **caractérisé en ce que** le réseau comprend entre 10 et 1000 sous-réseaux.

7. Substrat selon l'une des revendications précédentes, **caractérisé en ce que** plus de 25% des sous-réseaux ont une période p supérieure à 1,2 pₘ et plus de 25% des sous-réseaux ont une période p inférieure à 0,8 pₘ.

8. Substrat selon l'une des revendications précédentes **caractérisé en ce que** à l'intérieur d'un sous-réseau, plus de 25% des distances entre blocs voisins sont supérieures à 1,2 Dbₘ et plus de 25% des distances entre blocs voisins sont inférieures à 0,7 Dbₘ.

9. Substrat selon l'une des revendications précédentes **caractérisé en ce que** tout bloc à l'intérieur d'un sous-réseau comprend 2 à 10 motifs et de préférence 2 à 5 motifs.

10. Substrat selon l'une des revendications précédentes **caractérisé en ce que** la distance entre barycentres de motifs voisins est comprise entre 100 nm et 20 µm.

11. Substrat selon l'une des revendications précédentes, **caractérisé en ce que** pour tous les sous-réseaux, pₘ est comprise entre 300 nm et 500 nm.

12. Fenêtre comprenant un substrat de l'une des revendications précédentes.

13. Bâtiment comprenant une fenêtre selon la revendication précédente, ladite fenêtre étant verticale et exposée à la lumière solaire.

14. Bâtiment selon la revendication précédente, caractérisé en qu'il est situé en une latitude terrestre telle que les rayons solaires peuvent former un angle d'incidence avec l'horizontale supérieur à 30° au moins partiellement au cours de l'année.

15. Utilisation d'un substrat de l'une des revendications de substrat précédentes pour rediriger la lumière solaire vers un plafond.

## Claims

1. A transparent substrate having at its surface a grating of parallel lines of patterns separated by zones with a refractive index different from that of the patterns, **characterized in that** said grating diffuses light and comprises at least 4 sub-gratings, each sub-grating comprising
a plurality of blocks of identical patterns with a width L, each block comprising 2 to 10 of said patterns, the centers of gravity of neighboring patterns inside a block being separated by a constant period p, the distance Db between neighboring blocks varying in a non-monotonic manner when passing from one edge of the sub-grating to the other edge of said sub-grating, while being greater than 0 times L and less than 20 times L, and so that it is at least once greater than 1.2 Dbₘ and at least once less than 0.7 Dbₘ, Dbₘ being the arithmetic mean of distances between blocks of the sub-grating,
and the period p varying from one sub-grating to another in a non-monotonic manner between 0.5 pₘ and 1.5 pₘ when passing from one edge of the grating to the other, pₘ being the arithmetic mean of periods p characteristic of the sub-gratings, and so that at least one sub-grating has a period greater than 1.2 pₘ and that at least one sub-grating has a period less than 0.8 pₘ.

2. The substrate as claimed in the preceding claim, **characterized in that** at least 80% and preferably at least 90% of the patterns of a sub-grating form part of the blocks.

3. The substrate as claimed in one of the preceding claims, **characterized in that** at least 80% and preferably at least 90% of the patterns of the grating form part of the blocks.

4. The substrate as claimed in one of the preceding claims, **characterized in that** each sub-grating contains at least 4 blocks.

5. The substrate as claimed in the preceding claim, **characterized in that** each sub-grating contains 100 to 5000 blocks.

6. The substrate as claimed in one of the preceding claims, **characterized in that** the grating comprises between 10 and 1000 sub-gratings.

7. The substrate as claimed in one of the preceding claims, **characterized in that** more than 25% of the sub-gratings have a period p less than 1.2 pₘ and more than 25% of the sub-gratings have a period p less than 0.8 pₘ.

8. The substrate as claimed in one of the preceding claims, **characterized in that** more than 25% of the distances between neighboring blocks inside a sub-grating are greater than 1.2 Dbₘ and more than 25% of the distances between neighboring blocks are less than 0.7 Dbₘ.

9. The substrate as claimed in one of the preceding claims, **characterized in that** any block inside a sub-grating comprises 2 to 10 patterns and preferably 2 to 5 patterns.

10. The substrate as claimed in one of the preceding claims, **characterized in that** the distance between the centers of gravity of neighboring patterns lies between 100 nm and 20 µm.

11. The substrate as claimed in one of the preceding claims, **characterized in that** for all the sub-gratings pₘ lies between 300 nm and 500 nm.

12. A window comprising a substrate of one of the preceding claims.

13. A building having a window as claimed in the preceding claim, said window being vertical and exposed to sunlight.

14. The building as claimed in the preceding claim, **characterized in that** it is situated in a terrestrial latitude such that the sun's rays may form an angle of incidence with the horizontal greater than 30°, at least partially during the year.

15. The use of a substrate of one of the preceding substrate claims for redirecting sunlight toward a ceiling.

## Patentansprüche

1. Transparentes Substrat, das auf seiner Oberfläche ein Netz aus parallelen Linien von Motiven, die durch Bereiche, welche einen anderen Brechungsindex als die Motive haben, getrennt sind, umfasst und **dadurch gekennzeichnet ist, dass** das Netz das Licht streut und wenigstens 4 Unternetze umfasst, wobei jedes Unternetz umfasst
eine Vielzahl von identischen Motivblöcken der Breite L, wobei jeder Block 2 bis 10 der Motive umfasst, wobei die Schwerpunkte von benachbarten Motiven innerhalb eines Blocks um eine konstante Periode p beabstandet sind, wobei der Abstand Db zwischen benachbarten Blöcken sich auf nicht-monotone Weise von einem Rand des Unternetzes zum anderen Rand des Unternetzes dadurch ändert, dass er größer als 0 mal L und kleiner als 20 mal L ist, und so, dass er wenigstens einmal größer als 1,2 Dbₘ und wenigstens einmal kleiner als 0,7 Dbₘ ist, wobei Dbₘ der arithmetische Mittelwert der Abstände zwischen Blöcken des Unternetzes ist,
und die Periode p von einem Unternetz zum nächsten auf nicht-monotone Weise von einem Rand des Netzes zum anderen zwischen 0,5 pₘ und 1,5 pₘ variiert, wobei pₘ der arithmetische Mittelwert der charakteristischen Perioden p der Unternetze ist, und so, dass wenigstens ein Unternetz eine Periode größer als 1,2 pₘ aufweist und dass wenigstens ein Unternetz eine Periode kleiner als 0,8 pₘ aufweist.

2. Substrat nach dem vorstehenden Anspruch, **dadurch gekennzeichnet, dass** wenigstens 80 % und vorzugsweise wenigstens 90 % der Motive eines Unternetzes zu Blöcken gehören.

3. Substrat nach einem der vorstehenden Ansprüche, **dadurch gekennzeichnet, dass** wenigstens 80 % und vorzugsweise wenigstens 90 % der Motive des Netzes zu Blöcken gehören.

4. Substrat nach einem der vorstehenden Ansprüche, **dadurch gekennzeichnet, dass** jedes Unternetz wenigstens 4 Blöcke umfasst.

5. Substrat nach dem vorstehenden Anspruch, **dadurch gekennzeichnet, dass** jedes Unternetz 100 bis 5000 Blöcke enthält.

6. Substrat nach einem der vorstehenden Ansprüche, **dadurch gekennzeichnet, dass** das Netz zwischen 10 und 1000 Unternetze umfasst.

7. Substrat nach einem der vorstehenden Ansprüche, **dadurch gekennzeichnet, dass** mehr als 25 % der Unternetze eine Periode p größer als 1,2 pₘ haben und mehr als 25 % der Unternetze eine Periode p kleiner als 0,8 pₘ haben.

8. Substrat nach einem der vorstehenden Ansprüche, **dadurch gekennzeichnet, dass** innerhalb eines Unternetzes mehr als 25 % der Abstände zwischen benachbarten Blöcken größer als 1,2 Dbₘ sind und mehr als 25 % der Abstände zwischen benachbarten Blöcken kleiner als 0,7 Dbₘ sind.

9. Substrat nach einem der vorstehenden Ansprüche, **dadurch gekennzeichnet, dass** jeder Block innerhalb eines Unternetzes 2 bis 10 Motive und vorzugsweise 2 bis 5 Motive umfasst.

10. Substrat nach einem der vorstehenden Ansprüche, **dadurch gekennzeichnet, dass** der Abstand zwischen Schwerpunkten von benachbarten Motiven im Bereich zwischen 100 nm und 20 µm liegt.

11. Substrat nach einem der vorstehenden Ansprüche, **dadurch gekennzeichnet, dass** pₘ bei allen Unternetzen im Bereich zwischen 300 nm und 500 nm liegt.

12. Fenster, das ein Substrat von einem der vorstehenden Ansprüche umfasst.

13. Gebäude, das ein Fenster nach dem vorstehenden Anspruch umfasst, wobei das Fenster vertikal verläuft und dem Sonnenlicht ausgesetzt ist.

14. Gebäude nach dem vorstehenden Anspruch, **dadurch gekennzeichnet, dass** es sich auf einer geographischen Breite befindet, die derart ist, dass die Sonnenstrahlen, wenigstens teilweise im Laufe des Jahres, mit der Horizontalen einen Einfallwinkel von über 30° bilden können.

15. Verwendung eines Substrats von einem der vorstehenden Substratansprüche, zum Umlenken des Sonnenlichts in Richtung einer Decke.
